(19) Europäisches Patentamt
European Patent Office
Office européen des brevets

(11) Veröffentlichungsnummer : **0 449 776 A2**

# (12) EUROPÄISCHE PATENTANMELDUNG

(21) Anmeldenummer : **91810191.6**

(22) Anmeldetag : **21.03.91**

(51) Int. Cl.$^5$ : **C08G 59/42**, C08L 63/00, // (C08L63/00, 51:00)

(30) Priorität : **30.03.90 CH 1055/90**

(43) Veröffentlichungstag der Anmeldung : **02.10.91 Patentblatt 91/40**

(84) Benannte Vertragsstaaten : **CH DE ES FR GB IT LI NL SE**

(71) Anmelder : **CIBA-GEIGY AG**
**Klybeckstrasse 141**
**CH-4002 Basel (CH)**

(72) Erfinder : **Eldin, Sameer H., Dr.**
**Route de Schiffenen 10**
**CH-1700 Fribourg (CH)**
Erfinder : **Maurer, Jürg ,Dr.**
**Bäumlihofstrasse 395**
**4125 Riehen (CH)**
Erfinder : **Peyer, Robert Peter, Dr.**
**Brückfeldstrasse 42**
**3012 Bern (CH)**

## (54) Modifizierte Epoxidharze.

(57) Epoxidharzzusammensetzungen enthaltend
a) mindestens ein Epoxidharz mit durchschnittlich mehr als einer 1,2-Epoxygruppe pro Molekül,
b) einen Anhydridhärter für das Epoxidharz a),
c) einen Zähigkeitsvermittler und
d) eine Verbindung mit zwei aktiven Wasserstoffatomen, die befähigt ist, mit dem Epoxidharz a) zu reagieren
weisen eine hervorragende Zähigkeit auf und eignen sich als Giessharze, Laminierharze, Pressmassen, Beschichtungsmassen und Umhüllungssysteme für elektrische und elektronische Bauteile.

EP 0 449 776 A2

Die vorliegende Erfindung betrifft durch Zähigkeitsvermittler modifizierte Epoxidharzzusammensetzungen, die daraus gehärteten Produkte, ein Verfähren zur Zähigkeitsverbesserung von Epoxidharzen sowie neue Zähigkeitsvermittler.

Epoxidharze weisen im allgemeinen im gehärteten Zustand ausgezeichnete mechanische und chemische Eigenschaften wie beispielsweise gute Hitzewiderstandsfähigkeit, Härte, Formstabilität, elektrische Eigenschaften und chemische Resistenz auf. Allerdings genügen typische Epoxid-Duromere in Bezug auf Zähigkeit den an sie gestellten Anforderungen nicht und neigen zu Sprödigkeit.

Versuche zur Verbesserung dieses Mangels durch Einbau von elastomerem Material in Epoxidharze sind schon gemacht worden.
So beschreibt die EP-A 245018 lagerstabile, hitzehärtbare Epoxidharzzusammensetzungen als Klebstoffe, die als Zähigkeitsvermittler Polymere mit einer gummiweichen und einer thermoplastischen Phase enthalten. Geeignete Materialien sind carboxyterminierte Butadien/Acrylnitril-Kautschuke, Pfropfpolymere wie z.B. Methacrylat/Butadien/Styrol-Polymere und sogenannte Core/Shell-Polymere, die einen weichen Kern und eine harte Schale besitzen. Beste Zähigkeit wird durch Kombination von carboxyterminiertem Butadien/Acrylnitril-Kautschuk mit Core/Shell-Polymeren erhalten. Weiter ist aus der US-A 3,856,883 ein Verfahren zur Verbesserung der Schlagzähigkeit und der Ermüdungseigenschaften in Duroplasten, wie z.B. epoxy-, carboxy- oder hydroxyfunktionellen Harzen, Melamin/Formaldehyd- oder Phenol/Formaldehydharzen bekannt. Darin werden Core/Shell-Polymere mit einem weichen Acrylatkern und einer harten Schale, die eine Epoxy-, Carboxy- oder Hydroxyfunktionalität aufweist, in das Harzpräpolymer eingearbeitet und zusammen ausgehärtet.
Ferner beschreibt die US-A 4,778,851 eine Epoxidharzzusammensetzung mit guter Zähigkeit und Hitzestabilität, worin sich in der Epoxidharzphase eine diskontinuierliche Phase aus Pfropfkautschuk-Partikeln befindet. Diese Partikel haben Core/Shell-Struktur, mit einem im Epoxidharz unlöslichen, elastomeren Kern und einer Schale, die mit den Epoxygruppen des Harzes reagierende Gruppen aufweist.

Diese Epoxidharze mit verbesserter Zähigkeit genügen jedoch nicht immer den Anforderungen, die heute an Giessharzformulierungen auf Epoxidharzbasis, insbesondere in der Elektrotechnik gestellt werden.

Es wurde nun gefunden, dass überraschenderweise durch Zugabe eines Zähigkeitsvermittlers in Kombination mit einer Verbindung mit zwei aktiven Wasserstoffatomen sowohl die Zähigkeit als auch die übrigen mechanischen Eigenschaften eines Epoxidharzes deutlich verbessert werden.

Die vorliegende Erfindung betrifft eine Epoxidharzzusammensetzung enthaltend

a) mindestens ein Epoxidharz mit durchschnittlich mehr als einer 1,2-Epoxygruppe pro Molekül,

b) einen Anhydridhärter für das Epoxidharz a),

c) einen Zähigkeitsvermittler und

d) eine Verbindung mit zwei aktiven Wasserstoffatomen, die befähigt ist, mit dem Epoxidharz a) zu reagieren.

Als Epoxidharze, die erfindungsgemäss eingesetzt werden können, eignen sich alle Typen von Epoxidharzen, wie beispielsweise solche, die direkt an Sauerstoff-, Stickstoff- oder Schwefelatome gebundene Gruppen der Formel

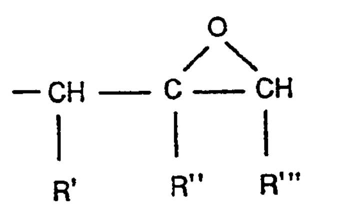

,

worin entweder R'und R''' je ein Wasserstoffatom darstellen, in welchem Fall R" dann ein Wasserstoffatom oder eine Methylgruppe bedeutet, oder R'und R''' zusammen $-CH_2CH_2-$oder $-CH_2CH_2CH_2-$ darstellen, in welchem Fall R" dann ein Wasserstoffatom bedeutet, enthalten.

Als Beispiele solcher Harze seien Polyglycidyl- und Poly(β-methylglycidyl)-ester genannt, die man durch Umsetzung einer zwei oder mehr Carbonsäuregruppen pro Molekül enthaltenden Verbindung mit Epichlorhydrin, Glycerindichlorhydrin oder β-Methylepichlorhydrin in Gegenwart von Alkali erhalten kann. Solche Polyglycidylester können sich von aliphatischen Polycarbonsäuren, z.B. Oxalsäure, Bernsteinsäure, Glutarsäure, Adipinsäure, Pimelinsäure, Korksäure, Azelainsäure, Sebacinsäure oder dimerisierter oder trimerisierter Linolsäure, von cycloaliphatischen Polycarbonsäuren, wie Tetrahydrophthalsäure, 4-Methyltetrahydrophthalsäure, Hexahydrophthalsäure und 4-Methylhexahydrophthalsäure, und von aromatischen Polycarbonsäuren, wie Phthalsäure, Isophthalsäure und Terephthalsäure, ableiten.

Weitere Beispiele sind Polyglycidyl- und Poly-(β-methylglycidyl)-ether, die durch Umsetzung einer mindestens zwei freie alkoholische und/oder phenolische Hydroxylgruppen pro Molekül enthaltenden Verbindung mit dem entsprechenden Epichlorhydrin unter alkalischen Bedingungen, oder auch in Gegenwart eines sauren Katalysators mit nachfolgender Alkalibehandlung, erhältlich sind. Diese Ether lassen sich mit Poly-(epichlorhydrin) aus acyclischen Alkoholen wie Ethylenglykol, Diethylenglykol und höheren Poly-(oxyethylen)-glykolen, Propan-1,2-diol und Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Pentaerythrit und Sorbit, aus cycloaliphatischen Alkoholen wie Resorcit, Chinit, Bis-(4-hydroxycyclohexyl)-methan, 2,2-Bis-(4-hydroxycyclohexyl)-propan und 1,1-Bis-(hydroxymethyl)cyclohexen-3 und aus Alkoholen mit aromatischen Kernen, wie N,N-Bis-(2-hydroxyethyl)-anilin und p,p'-Bis-(2-hydroxyethylamino)-diphenylmethan, herstellen. Man kann sie ferner aus einkernigen Phenolen, wie Resorcin und Hydrochinon, sowie mehrkernigen Phenolen, wie Bis-(4-hydroxyphenyl)-methan, 4,4-Dihydroxydiphenyl, Bis-(4-hydroxyphenyl)-sulfon, 1,1,2,2-Tetrakis-(4-hydroxyphenyl)-ethan, 2,2-Bis-(4-hydroxyphenyl)-propan (sonst als Bisphenol A bekannt) und 2,2-Bis-(3,5-dibrom-4-hydroxyphenyl)-propan sowie aus Aldehyden, wie Formaldehyd, Acetaldehyd, Chloral und Furfural, mit Phenolen, wie Phenol selbst und durch Chloratome oder Alkylgruppen mit jeweils bis zu neun Kohlenstoffatomen ringsubstituiertem Phenol, wie 4-Chlorphenol, 2-Methylphenol und 4-tert-Butylphenol, gebildeten Novolaken herstellen.

Poly-(N-glycidyl)-verbindungen umfassen beispielsweise solche, die durch Dehydrochlorierung der Umsetzungsprodukte von Epichlorhydrin mit mindestens zwei Aminowasserstoffatome enthaltenden Aminen, wie Anilin , n-Butylamin, Bis-(4-aminophenyl)-methan und Bis-(4-methyl-aminophenyl)-methan, erhalten werden, Triglycidylisocyanwat sowie N,N'-Diglycidylderivate von cyclischen Alkylenharnstoffen, wie Ethylenhastoff und 1,3-Propylenharnstoff und Hydantoinen, wie 5,5-Dimethylhydantoin.

Poly-(S-glycidyl)-verbindungen sind zum Beispiel die Di-S-glycidylderivate von Dithiolen, wie Ethan-1,2-dithiol und Bis-(4-mercaptomethylphenyl)-ether.

Beispiele für Epoxidharze mit Gruppen der Formel

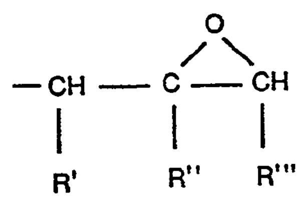

,

worin R′ und R‴ zusammen eine $-CH_2CH_2-$ oder eine $-CH_2-CH_2-CH_2-$Gruppe bedeuten, sind Bis-(2,3-epoxycyclopentyl)-ether, 2,3-Epoxycyclopentyl-glycidylether, 1,2-Bis-(2,3-epoxycyclopentyloxy)-ethan und 3,4-Epoxycyclohexylmethyl-3′,4′-epoxycyclohexancarboxylat.

In Betracht kommen auch Epoxidharze, in welchen die 1,2-Epoxidgruppen an Heteroatome verschiedener Art gebunden sind, z.B. das N,N,O-Triglycidylderivat des 4-Aminophenols, der Glycidylether/Glycidylester der Salicylsäure oder p-Hydroxybenzoesäure, N-Glycidyl-N′-(2-glycidyloxypropyl)-5,5-dimethylhydantoin und 2-Glycidyloxy-1,3-bis-(5,5-dimethyl-1-glycidylhydantoinyl-3)propan.

Gewünschtenfalls kann man Epoxidharzgemische verwenden.

Bevorzugt werden Epoxidharze auf der Basis von Bisphenol A, Bisphenol F oder einem Cycloolefin, insbesondere solche, die durchschnittlich zwei 1,2-Epoxygruppen pro Molekül enthalten.

Ganz besonders bevorzugt werden flüssige und niederviskose Epoxidharze. Zweckmässig übersteigt die Viskosität bei 25°C einen Wert von 20'000 mPa·s nicht.

Als Anhydridhärter können prinzipiell alle Anhydride von di- und höherfunktionellen Carbonsäuren in Frage kommen, wie z.B. lineare aliphatische polymere Anhydride, wie beispielsweise Polysebacinsäurepolyanhydrid oder Polyazelainsäurepolyanhydrid, oder cyclische Carbonsäureanhydride, wobei letztere bevorzugt sind.

Als cyclische Carbonsäureanhydride handelt es sich vorzugsweise um ein alicyclisches Einfach- oder Mehrring-Anhydrid, ein aromatisches Anhydrid oder ein chloriertes oder bromiertes Anhydrid.

Beispiele für alicyclische Einfach-Anhydride sind:

Bernsteinsäureanhydrid, Citraconsäureanhydrid, Itaconsäureanhydrid, alkenyl-substituierte Bernsteinsäureanhydride, Dodecenylbernsteinsäureanhydrid, Maleinsäureanhydrid und Tricarballylsäureanhydrid.

Beispiele für alicyclische Mehrring-Anhydride sind:

Maleinsäureanhydridaddukt an Methylcyclopentadien, Linolsäureaddukt an Maleinsäureanhydrid, alkylierte Endoalkylentetrahydrophthalsäureanhydride, Methyltetrahydrophthalsäureanhydrid, Tetrahydrophthalsäureanhydrid; wobei von den beiden letzteren die Isomerengemische besonders geeignet sind. Ebenfalls bevorzugt ist Hexahydrophthalsäureanhydrid.

Beispiele für aromatische Anhydride sind:
Pyromellitsäuredianhydrid, Trimellitsäureanhydrid und Phthalsäureanhydrid.

Beispiele für chlorierte oder bromierte Anhydride sind:
Tetrachlorphthalsäureanhydrid, Tetrabromphthalsäureanhydrid, Dichlormaleinsäureanhydrid und Chlorendic-Anhydrid.

Vorzugsweise werden flüssige oder leicht schmelzende Dicarbonsäureanhydride in den erfindungsgemässen Zusammensetzungen eingesetzt.

Bevorzugt sind Zusammensetzungen enthaltend als Anhydridhärter ein alicyclisches Einfach- oder Mehrring-Anhydrid, insbesondere Methyl-nadicanhydrid, Hexahydrophthalsäureanhydrid, Methyltetrahydrophthalsäureanhydrid und dessen Isomerengemisch.

Falls gewünscht kann der Anhydridhärter in Kombination mit einem für Anhydridhärter üblichen Reaktionsbeschleuniger eingesetzt werden. Dieser kann sowohl gleichzeitig mit dem Anhydridhärter in die Zusammensetzung eingearbeitet werden oder, zur Verlängerung der Gebrauchsdauer, der Zusammensetzung erst vor der Härtung zugesetzt werden. Vorzugsweise erfolgt die Zugabe erst kurz vor der Härtung.

Bevorzugt wird der Anhydridhärter in Kombination mit dem Reaktionsbeschleuniger verwendet.

Als Reaktionsbeschleuniger eignen sich z.B. tertiäre Amine, Carbonsäure-metallsalze, Metallchelate oder Organophosphine.

Bevorzugt sind die tertiären Amine, insbesondere substituierte Imidazole wie z.B. 1-Methylimidazol.

Als Zähigkeitsvermittler für die erfindungsgemässen Zusammensetzungen kommen die als "Rubber toughener" dem Fachman bekannten Elastomere oder Elastomere enthaltende Pfropfpolymere in Frage, sofern sie in der erfindungsgemässen Epoxidharzzusammensetzung im ausgehärteten Zustand eine zweite dispergierte Phase bilden.

Dabei können die Zähigkeitsvermittler im Ausgangszustand flüssig oder fest sein.

Flüssige Zähigkeitsvermittler bilden in der erfindungsgemässen Zusammensetzung im nicht gehärteten Zustand eine homogene Phase.

Flüssige Zähigkeitsvermittler können auch als Voraddukte mit z.B. Epoxidharzen eingesetzt werden.

Beispiele für solche flüssigen Zähigkeitsvermittler sind carboxyl-terminierte Butadien/Acrylnitril-Copolymere, wie sie z.B. in der EP-A 245 018 beschrieben sind.

Feste Zähigkeitsvermittler umfassen Pfropfpolymere, wie sie z.B. in der US-A 3,496,250 beschrieben sind, sowie Core/Shell-Polymere, wie sie z.B. aus der EP 45 357 und der US-A 4,419,496 bekannt sind.

Beispiele für Pfropfpolymere sind Methacrylat/Butadien-Styrol-, Acrylat-Methacrylat/Butadien-Styrol- oder Acrylnitril/Butadien-Styrol-Polymere.

Core/Shell-Polymere haben in der Regel einen weichen Kern (Core) aus einem elastomeren Material, der im Epoxidharz unlöslich ist. Darauf aufgepfropft ist eine Hülle (Shell) aus polymerem Material, das sowohl eine mit Epoxygruppen reaktionsfähige wie auch eine nichtreaktionsfähige Funktionalität aufweisen kann.

Beispiele für Elastomere, die als Core-Material eingesetzt werden können, sind Polybutadien, Polysulfide, Acrylkautschuk, Butylkautschuk oder Isopren-Elastomer. Vorzugsweise enthält das Core-Material Polybutadien.

Beispiele für polymere Shell-Materialien sind Polystyrol, Polyacrylnitril, Methylacrylat-Acrylsäure-Copolymere, Polymethylmethacrylat oder Styrol/Acrylnitril/Glycidylmethacrylat-Copolymere. Vorzugsweise wird als Shell-Material Polymethylmethacrylat eingesetzt.

Die Grösse solcher Core/Shell-Partikel beträgt zweckmässig 0,05-30 µm, vorzugsweise 0,05-15 µm.

Bevorzugt sind Core/Shell-Polymere mit einer mit Epoxygruppen nicht reaktiven Hülle.

Zum Teil sind die Core/Shell-Polymere im Handel erhältlich, wie z.B. Paraloid® EXL 2607 der Firma Rohm & Haas, USA, oder lassen sich nach der z.B. in der US-A 4,419,496 oder der EP-A 45 357 beschriebenen Weise herstellen.

Bevorzugt eingesetzt werden Core/Shell-Polymere enthaltend einen Kern (Core) ausgewählt aus der Gruppe bestehend aus Polybutadien, Polybutadien/Polystyrol und Polybutadien/Acrylnitril und eine Hülle (Shell) ausgewählt aus der Gruppe bestehend aus Polymeren auf der Basis von Methylmethacrylat, Methacrylsäurecyclohexylester, Acrylsäurebutylester, Styrol, Methacrylnitril, Vinylacetat und Vinylalkohol.

Sofern es sich bei den erfindungsgemäss eingesetzten Core/Shell-Polymeren um neue Polymerzusammensetzungen handelt, bilden sie ebenfalls einen Gegenstand der vorliegenden Erfindung.

Die Menge an Zähigkeitsvermittler, die den erfindungsgemässen Epoxidharzzusammensetzungen zugesetzt wird, beträgt vorzugsweise bis 40 Gew.-%, insbesondere bis 20 Gew.-%, bezogen auf das Epoxidharz a).

Der Zähigkeitsvermittler kann auch in einer besonders bevorzugten Ausführungsform als Suspension in einem Epoxidharz eingesetzt werden.

Als Verbindung d) kann jede Verbindung eingesetzt werden, sofern sie zwei aktive Wasserstoffatome

besitzt und mit dem Epoxidharz a) reagieren kann. Bevorzugte Verbindungen d) sind solche, die dem Fachmann als Vorverlängerungskomponenten für Epoxidharze bekannt sind, wie z.B. Biphenole, Hydroxycarbonsäuren, Dicarbonsäuren, disekundäre Amine oder primäre Amine.

Beispiele für Biphenole sind: einkernige Diphenole (wie Resorcin), Naphthaline mit zwei Hydroxygruppen, wie 1,4-Dihydroxynaphthalin, Biphenyle und andere zweikernige aromatische Verbindungen, die eine Methylen-, Isopropyliden-, O-, $SO_2$- oder S-Brücke aufweisen und zwei Hydroxygruppen an den aromatischen Kernen gebunden enthalten, wie insbesondere Bisphenol A, Bisphenol F oder Bisphenol S; die Benzolkerne können auch Halogenatome aufweisen, wie Tetrabrombisphenol A.

Beispiele für Hydroxycarbonsäuren sind α-Hydroxycarbonsäuren, wie Glycolsäure oder Milchsäure, β-Hydroxycarbonsäuren wie Hydracrylsäure oder Phenolcarbonsäuren, wie Salicylsäure.

Beispiele für Dicarbonsäuren sind aliphatische Dicarbonsäuren, wie Oxalsäure, Malonsäure, Bernsteinsäure, Glutarsäure, Adipinsäure, Azelainsäure, Sebacinsäure oder 3,6,9-Trioxaundecandisäure, oder aromatische Dicarbonsäuren, wie Phthalsäure, Isophthalsäure, Terephthalsäure oder Naphthalsäure, oder Diester-Dicarbonsäuren, die beispielsweise durch Umsetzung von Glykolen, z.B. Neopentylglykol, mit zwei Äquivalenten Dicarbonsäureanhydrid, wie z.B. Tetrahydrophthalsäureanhydrid, erhältlich sind.

Beispiele für disekundäre Amine, die sowohl aliphatisch als auch aromatisch sein können, sind N,N'-Diethylethylamin, Piperazin oder N,N'-Dimethylphenylendiamin.

Beispiele für primäre Amine sind aliphatische Amine, wie n-Propylamin, n-Butylamin, n-Hexylamin oder aromatische Amine, wie Anilin oder Naphthylamin.

Bevorzugt sind Biphenole, insbesondere Bisphenol A, und Dicarbonsäuren, insbesondere 3,6,9-Trioxaundecandisäure.

Zweckmässig werden bis 50 Gew.-%, bevorzugt bis 25 Gew.-%, bezogen auf das Epoxidharz a), der Verbindung d) eingesetzt.

Für gefüllte erfindungsgemässe Epoxidharzzusammensetzungen kommen z.B. folgende Füllstoffe in Betracht: Mineralische und faserförmige Füllstoffe, wie Quarzmehl, Quarzgut, Aluminiumoxid, Glaspulver, Glimmer, Kaolin, Dolomit, Graphit, Russ, sowie Kohlefasern und Textilfasern. Bevorzugte Füllstoffe sind Quarzmehl, Quarzgut, Aluminiumoxid oder Dolomit.

Die erfindungsgemässen Epoxidharzzusammensetzungen werden nach an sich bekannten Methoden, wie beispielsweise mit Hilfe bekannter Mischaggregate (Rührer, Kneter, Walzen oder im Falle fester Substanzen bzw. Pulver in Mühlen oder Trockenmischern) hergestellt.

Dabei spielt es keine Rolle, ob zuerst der Zähigkeitsvermittler mit der Verbindung d) separat gemischt und als Gemisch in das Harz/Härtersystem eingearbeitet wird, oder ob der Zähigkeitsvermittler respektive die Verbindung d) einzeln zugegeben werden, wobei die Reihenfolge unerheblich ist.

So können beispielsweise der Zähigkeitsvermittler und die Verbindung d) in das flüssige Epoxidharz/Anhydridhärtersystem eingerührt werden.

Die Einarbeitungstechniken sind bekannt und z.B. in der US-A 4,778,851 beschrieben.

Die Härtung der erfindungsgemässen Epoxidharzzusammensetzungen zu Formkörpern oder dergleichen erfolgt in für Anhydridhärter an sich üblicher Weise bei erhöhter Temperatur. Man kann die Härtung ein-, zwei- oder mehrstufig durchführen, wobei die erste Härtungsstufe bei niedriger Temperatur und die Nachhärtung bei höherer Temperatur durchgeführt wird.

Daher betrifft die vorliegende Erfindung auch die gehärteten Produkte, die erhältlich sind durch Härtung der erfindungsgemässen Epoxidharzzusammensetzungen auf an sich übliche Weise.

Weiter betrifft die vorliegende Erfindung auch ein Verfahren zur Verbesserung der Zähigkeit von Epoxidharzen, dadurch gekennzeichnet, dass man zu einem ungefüllten oder gefüllten Epoxidharz-/Anhydridhärtersystem eine erfindungsgemässe Kombination eines Zähigkeitsvermittlers mit einer Verbindung d) zugibt und das so erhaltene System auf an sich übliche Weise härtet.

Die erfindungsgemässen Epoxidharzzusammensetzungen eignen sich ausgezeichnet als Giessharze, Laminierharze, Pressmassen, Beschichtungsmassen sowie als Umhüllungssysteme für elektrische und elektronische Bauteile, insbesondere als Giessharze und Umhüllungssysteme für elektrische und elektronische Bestandteile.

<u>Beispiel A</u>: Polymer I

202,7 g Polybutadienlatex (BL 2004 K der Firma Bayer AG) mit einem Feststoffgehalt von 59,2 % und 397,3 g deionisiertes Wasser werden in einem 1 l Planschliffkolben, der mit Doppelmantel, Glasankerrührer, Thermometer, Kühler, Umlaufthermostat und $N_2$-Anschluss ausgerüstet ist, unter $N_2$ vorgelegt und mit 100 rpm (Umdrehungen pro Minute) gerührt. Das Gemisch wird auf 80°C ± 1°C aufgeheizt. Nach ca. 55 Minuten ist eine Innentemperatur von 80°C erreicht. Nun wird mit dem Zutropfen von 90,0 g destilliertem Methacrylsäuremethylester (purum, der Firma Fluka, Schweiz) und einer Lösung von 4,0 g Kaliumperoxiddisulfat und 3,5 g Dodecylbenzolsulfonsäure-Na-salz in 110 ml destilliertem Wasser begonnen. Nach 3,5 Stunden liegt eine homogene, weisse Emulsion vor. Nach insgesamt 6 Stunden 10 Minuten ist die Zugabe des Methylmethacrylats sowie des Initiators beendet.

Es wird während weiteren 2 Stunden bei 80°C nachgerührt. Am Ende dieser Zeit werden 3 ml einer 20%igen Emulsion von n-Octadecyl-3-(3,5-di-tert.-butyl-4-hydroxyphenyl)propionat der homogenen weissen Emulsion beigegeben und das Ganze dann auf Raumtemperatur abgekühlt. Bei Raumtemperatur ist die Emulsion ebenfalls homogen und weiss gefärbt. Sie wird durch Glaswolle filtriert. Es sind keine Agglomerate vorhanden. Die Emulsion wird auf 900 g verdünnt was einen Feststoffgehalt von 22,5 % ergibt. Die so erhaltene Emulsion kann nun auf zwei verschiedene Arten als Zähigkeitsvermittler (toughener) eingesetzt werden:

- tel quel d.h. als Latex (Polymer I a)
- koaguliert und gemahlen (Polymer I b)

Zur Koagulation werden 700 g der Emulsion mit 1000 ml deionisiertem Wasser in einem 2,5l Sulfierkolben unter Rühren auf ca. 70°C erwärmt. Bei 68°C werden 100 ml Koagulierlösung (100 g $MgSO_4 \cdot 7H_2O$ + 850 ml deionisiertes Wasser + 50 ml Eisessig) dazugegeben, worauf auf 90-95°C aufgeheizt wird. Bei einer Innentemperatur von 73°C koaguliert die Emulsion in sehr feiner Form. Sobald die Innentemperatur 90°C erreicht hat wird während 1 Stunde bei 90-95°C weitergerührt. Es liegt nun eine sehr feinverteilte, weisse Suspension vor. Danach wird auf Raumtemperatur abgekühlt, filtriert, mit Wasser gewaschen und im Vakuum bei 50-60°C getrocknet.

Es werden 157,5 g weisses Produkt erhalten (96,4 % der Theorie).
Glasübergangstemperatur Tg: -81 °C (TMA)
Shore D-Härte (DIN 53505): 51
Effektiv aufgepfropftes Polymethylmethacrylat (PMMA): 71,5%* (Bestimmung durch erschöpfende Extraktion mit $CHCl_3$. Das homopolymerisierte PMMA ist in diesem Lösungsmittel löslich und wird herausgelöst).

Eine kleinere Menge des koagulierten und aufgearbeiteten Polymers wird in einer Kugelmühle während 24 Stunden gemahlen.

<u>Beispiele B & C:</u> Polymere II & III

In Analogie zu Beispiel A werden zwei weitere Core/Shell-Polymere, vom selben Polybutadienlatex BL 2004 K ausgehend, synthetisiert.

Die Produkte sind die Polymere II und III.

<u>Polymer II</u>

Shore-D Härte : 61
PMMA aufgepfropft (effektiv): 96,4 %*

<u>Polymer III</u>

Shore D Härte: 66
PMMA aufgepfropft (effektiv): 146,3 %*
* Die Werte beziehen sich auf die Menge PMMA (Gewicht) der Hülle (shell) in Bezug auf den Kern (core).

Das Polymer II wird sowohl in gemahlener Form (Polymer IIa) als auch in sprühgetrockneter Form (Polymer IIb) isoliert. In letzterem Fall erfolgt die Sprühtrocknung direkt ab Emulsion mit Hilfe eines Büchi® 190-Sprühtrockners der Firma Büchi, Schweiz, wobei die Eingangstemperatur 104°C und die Ausgangstemperatur 69°C betragen.

Das Polymer III wird nur in sprühgetrockneter Form isoliert. (Eingangstemperatur 104°C, Ausgangstemperatur 67°C).

<u>Beispiel D:</u> Polymer IV

100 g eines festen, kristallinen Epoxidharzes auf Isocyanuratbasis mit einem Epoxidgehalt von 9,44 Aeq./kg werden in einem 350 ml Sulfierkolben mit Rührer, Kühler und Thermometer vorgelegt und bei 120°C geschmolzen. Bei einer Innentemperatur von 122°C werden 100 g eines carboxyl-terminierten Butadien/Acrylnitril- Copolymers mit einem $H^+$ Aequivalent/1944 g (Hycar® 1300 x 13 der Firma Goodrich, USA) direkt in den Kolben eingewogen. Bei einer Innentemperatur von 131°C liegt eine braune praktisch klare Schmelze vor. Das Fortschreiten der Reaktion wird durch Messung des Epoxidgehaltes der Mischung kontrolliert. Unter Rühren

wird die Reaktion bei einer Innentemperatur von 140°C weitergeführt bis zu einem gemessenen Epoxidgehalt von 4,41 Aeq./kg. Bei einem Ausgangsepoxidwert der Mischung von 4,72 entspricht dies einer Abnahme von 0,31 Aeq./kg (Theorie 0,26). Das Produkt wird bei einer Temperatur von 140°C abgefüllt. Danach lässt man auf Raumtemperatur abkühlen, wobei sich das Produkt verfestigt.

Beispiel E: Polymere V - XV

In Analogie zu Beispiel A werden die in der nachfolgenden Tabelle aufgeführten Core/Shell-Polymeren synthetisiert, ausgehend vom selben Polybutadienlatex BL 2004 K.

| Polymer | Monomere | % Aufpfropfung | Härte Shore D |
|---|---|---|---|
| V | Methacrylsäuremethylester/Styrol 75:25 | 100 | 57 |
| VI | Methacrylsäuremethylester/Methacrylsäure-glycidylester 75:25 | 100 | 59 |
| VII | Methacrylsäuremethylester/Essigsäure-vinylester 75:25 | 100 | 54 |
| VIII | Styrol | 75 | 34 |
| IX | Essigsäurevinylester | 75 | 27 |
| X | Methacrylsäurebutylester | 100 | 15 |
| XI | Acrylsäurebutylester | 100 | 36 |
| XII | Methacrylsäure-2-ethylhexylester | 100 | 6 |
| XIII | Methacrylnitril | 100 | 48 |
| XIV | Methacrylsäurecyclohexylester | 100 | 44 |
| XV | Methacrylsäureisobutylester | 100 | 42 |

Beispiel F: Suspension des Pfropfpolymers aus Beispiel A in einem Epoxidharz

In einem 2l-Planschliffkolben mit Glasankerrührer und Vakuumanschluss werden 500 g eines flüssigen Epoxidharzes auf der Basis von Bisphenol A mit einem Epoxidgehalt von 5,35 Äq./kg vorgelegt und unter Rühren mit 100 ml Methylethylketon versetzt. Zur so erhaltenen klaren Lösung werden unter Rühren 222,2 g Pfropfpolymer-Emulsion aus Beispiel A mit einem Feststoffgehalt von 22,5 % (= 50,0 g Polymer I, 100 % Aufpfropfung) zugegeben und während 15 min verrührt. Das homogene Gemisch wird auf ca. 60 °C erwärmt und auf 150 - 200 mbar evakuiert, wobei zunächst ein Methylethylketon/Wasser-Gemisch und anschliessend Wasser abdestilliert wird. Gegen Ende der Destillation wird die Temperatur auf 80 °C erhöht und der Druck auf 40 - 50 mbar erniedrigt, wobei innerhalb 30 min das restliche Wasser entfernt wird.
Es wird eine homogene weisse, bei 80 °C gut rührbare Suspension erhalten, die nach Abkühlen auf 50 °C abgefüllt wird.

Ausbeute: 546,2 g
Epoxidgehalt: 4,86 Äq./kg
Wassergehalt: 0,16 % (Bestimmung nach K. Fischer)
Gehalt an Zähigkeitsvermittler: 10 phr (bezogen auf das Epoxidharz)

Beispiel G

Analog zu Beispiel A werden auf 342,9 g des Polybutadien/Acrylnitril-Latex Europrene®2620 (Acrylnitrilgehalt 35 %) mit einem Feststoffgehalt von 35 % 120 g (100 %) Methacrylsäuremethylester aufgepfropft.

| | |
|---|---|
| Ausbeute: 967 g Latex | |
| Pfropfpolymergehalt des Latex: | 24,6 % |
| Härte Shore D (Pfropfpolymer): | 62 |

Der erhaltene Latex wird analog zu Beispiel F mit einem flüssigen Epoxidharz auf der Basis von Bisphenol A, Epoxidgehalt 5,35 Äq./kg, zu einer Suspension verarbeitet.

| | |
|---|---|
| Ausbeute: | 547 g |
| Epoxidgehalt: | 4,86 Äq./kg |
| Wassergehalt: | 0,11 % (Bestimmung nach K. Fischer) |

Gehalt an Zähigkeitsvermittler: 10 phr (bezogen auf das Epoxidharz)

Beispiel H:

Analog zu Beispiel A werden auf 300 g des Polybutadien/Styrol-Latex Intex®084 (Styrolgehalt 24 %) mit einem Feststoffgehalt von 40,0 % 120 g (100 %) Methacrylsäuremethylester aufgepfropft.

| | |
|---|---|
| Ausbeute: 961 g Latex | |
| Pfropfpolymergehalt des Latex: | 24,7 % |
| Härte Shore D (Pfropfpolymer): | 62 |

Der erhaltene Latex wird analog zu Beispiel F mit einem flüssigen Epoxidharz auf der Basis von Bisphenol A, Epoxidgehalt 5,35 Äq./kg, zu einer Suspension verarbeitet.

| | |
|---|---|
| Ausbeute: | 549 g |
| Epoxidgehalt: | 4,86 Äq./kg |
| Wassergehalt: | 0,07 % (Bestimmung nach K. Fischer) |

Gehalt an Zähigkeitsvermittler: 10 phr (bezogen auf das Epoxidharz)

Beispiel I:

In einem 1,5 l-Planschliffkolben mit Doppelmantel, Glasankerrührer, Thermometer und Kühler werden 202,7 g Polybutadienlatex Baystal®2004 K (Feststoffgehalt 59,2 %) mit 397,2 g deionisiertem Wasser vermischt und unter Rühren (1000 U/min) auf 80 °C±1°C erwärmt. Bei 80 °C werden gleichzeitig 23,0 g Hexandioldimethacrylat (0,15 Äq. C-C-Doppelbindungen/100 g Polybutadien) und 30 ml Initiatorlösung innerhalb 1 h zugegeben. Anschliessend wird die homogene Emulsion 1 h bei 80 °C weitergerührt. Zur Bestimmung der Shore Härte wird eine Probe der Emulsion koaguliert und getrocknet.

Polybutadienlatex 2004 K: Härte Shore A = 41
zusätzlich vernetzter Polybutadienlatex 2004 K: Härte Shore A = 67

Auf das modifizierte (zusätzlich vernetzte) Polybutadien wird anschliessend analog Beispiel A Methacrylsäuremethylester aufgepfropft (100 %).

| | |
|---|---|
| Ausbeute: | 937 g Latex |
| Pfropfpolymergehalt des Latex: | 26,9 % |
| Härte Shore D (Pfropfpolymer): | 64 |

Der erhaltene Latex wird analog zu Beispiel F mit einem flüssigen Epoxidharz auf der Basis von Bisphenol A, Epoxidgehalt 5,31 Äq./kg zu einer Suspension verarbeitet.

Ausbeute: 549 g
Epoxidgehalt: 4,83 Äq./kg
Wassergehalt: 0,13 % (Bestimmung nach K. Fischer)
Gehalt an Zähigkeitsvermittler: 10 phr (bezogen auf das Epoxidharz)

Beispiel 1:

Zu 100 Gew.-Teilen eines flüssigen Epoxidharzes auf der Basis von Bisphenol A mit einem Epoxidgehalt von 5,0-5,25 Aeq./kg und einer Viskosität bei 25°C von 9000-14000 mPa·s werden Methyltetrahydrophthalsäureanhydrid, Bisphenol A, ein Core/Shell-Zähigkeitsvermittler mit einem PMMA/Polybutadien/Styrol-Core und einer PMMA-Shell mit einer Teilchengrösse von 0,1-0,3 µm (Paraloid® EXL 2607 der Firma Rohm & Haas, USA) sowie 1 -Methylimidazol in den aus der nachstehenden Tabelle 1 ersichtlichen Mengen zugegeben und gut durch Rühren vermischt, wobei die Imidazolkomponente erst zum Schluss dem Gemisch beigefügt wird.

Damit werden Formkörper hergestellt und diese 6 Stunden bei 80°C und anschliessend 10 Stunden bei 140°C ausgehärtet und anschliessend die Bruchzähigkeit bestimmt.

Tabelle 1

| | Gew.-Teile |
|---|---|
| Epoxidharz | 100 |
| Methyltetrahydrophthal-säureanhydrid | 62 |
| Core/Shell Zähigkeitsvermittler | 16,1 |
| Bisphenol A | 16,1 |
| 1-Methylimidazol | 0,5 |
| Bruchzähigkeit $G_{IC}$ (Bend Notch) [J/m$^2$] | 2032 |

Beispiel 2:

Analog zu Beispiel 1 wird das aus Tabelle 2 ersichtliche gefüllte Epoxidharzsystem eingesetzt. Die Härtung erfolgt während 2 Stunden bei 100°C und anschliessend wärhend 10 Stunden bei 140°C.

Tabelle 2

| | Gew.-Teile |
|---|---|
| Epoxidharz auf Bisphenol A-Basis EP-Aeq. 5,0-5,25/kg | 100 |
| Methyltetrahydrophthalsäureanhydrid | 62 |
| Paraloid® EXL 2607 (Rohm & Haas, USA) | 16,1 |
| Bisphenol A | 16,1 |
| 1-Methylimidazol | 0,5 |
| Quarzmehl W12 | 292 |
| Bruchzähigkeit $G_{IC}$ (Double Torsion) [$J/m^2$] | 1015 |
| Schlagbiegezähigkeit (ISO) [$kJ/m^2$] | 15,8 |
| Biegefestigkeit (ISO) [$N/mm^2$] | 126 |
| Randfaserdehnung (ISO) [%] | 2,25 |

Beispiel 3:

Analog zu Beispiel 2 wird ein gefülltes Epoxidharzsystem eingesetzt, wobei das Harz ein Epoxidharz auf der Basis von Bisphenol A und Cycloolefin ist (69,9 Gew.% Bisphenol A-diglycidylether, 29,9 Gew. % 3,4-Epoxycyclohexancarbonsäure-3,4-epoxycyclohexylmethylesterund 0,2 Gew.% Benzyltriethylammoniumchlorid) und einen Epoxidgehalt von 5,6-6,0 Aeq./kg sowie eine Viskosität bei 25°C von 4200-6500 mPa·s aufweist.

Die eingesetzten Mengen sind aus Tabelle 3 ersichtlich. Die Härtung erfolgt während 2 Stunden bei 100°C und anschliessend während 10 Stunden bei 140°C.

Tabelle 3

| | Gew.-Teile |
|---|---|
| Epoxidharz | 100 |
| Methyltetrahydrophthalsäureanhydrid | 72,2 |
| Paraloid® EXL 2607 | 10 |
| Bisphenol A | 18,7 |
| 1-Methylimidazol | 0,5 |
| Quarzmehl W12 | 302,1 |
| Bruchzähigkeit $G_{IC}$ (Double Torsion) [J/m²] | 647 |
| Schlagbiegezähigkeit (ISO) [kJ/m²] | 10,6 |
| Biegefestigkeit (ISO) [N/mm²] | 123 |
| Randfaserdehnung (ISO) [%] | 1,8 |

Beispiel 4:

Zu 45 Gew.-Teilen eines festen Epoxidharzes auf Isocyanuratbasis mit einem Epoxidgehalt von 9,3-10,0 Aeq./kg werden 55 Gew.-Teile des Polymers IV aus Beispiel D, 25 Gew.-Teile Bisphenol A, 80,1 Gew.-Teile Methylnadicanhydrid und 0,5 Gew.-Teile 1-Methylimidazol zugegeben und vermischt.

Die Härtung erfolgt während 10 Stunden bei 80°C, gefolgt von 4 Stunden bei 180°C und 8 Stunden bei 220°C.

Die Resultate der Zähigkeitsprüfung sind aus Tabelle 4 ersichtlich.

Tabelle 4

| | Beispiel 4 |
|---|---|
| Schlagbiegezähigkeit [kJ/m$^2$] | 23 |
| Biegewinkel (bis zum Bruch) [°( ] | 51 |
| Glasumwandlungstemperatur Tg [°C] | 219 |

Beispiel 5:

Zu 110 Gew.-Teilen Epoxidharz/Pfropfpolymer-Suspension aus Beispiel F werden bei 60 °C Methyltetrahydrophthalsäureanhydrid und Bisphenol A zugegeben und vermischt. Unter intensivem Rühren wird auf 140 °C vorgewärmtes Quarzmehl zugegeben. Zur ca. 80 °C warmen Mischung wird 1-Methylimidazol hinzugefügt und gut verrührt. Die Giessmischung wird 10 min auf 5 mbar evakuiert und anschliessend vergossen. Die Härtung erfolgt während 2 Stunden bei 100 °C und anschliessend während 10 Stunden bei 140 °C.
Die eingesetzten Mengen und die Resultate der Zähigkeitsprüfung sind aus Tabelle 5 ersichtlich.

Tabelle 5:

| | Gew.-Teile |
|---|---|
| Epoxidharz/Pfropfpolymer-Suspension | 110* |
| Methyltetrahydrophthalsäureanhydrid | 62 |
| Bisphenol A | 18,6 |
| 1-Methylimidazol | 0,5 |
| Quarzmehl W12 | 287 |
| Bruchzähigkeit $G_{IC}$ (Double Torsion) [J/m$^2$] | 595 |
| Schlagbiegezähigkeit (ISO) [kJ/m$^2$] | 12,9 |
| Biegefestigkeit (ISO) [N/mm$^2$] | 130 |
| Randfaserdehnung (ISO) [%] | 2,0 |

* 10 Gew.-Teile Zähigkeitsvermittler auf 100 Gew.-Teile Epoxidharz

Beispiel 6:

Analog zu Beispiel 5 wird anstelle von Bisphenol A als Komponente d) 3,6,9-Trioxaundecandisäure verwendet.
Die eingesetzten Mengen und die Resultate der Zähigkeitsprüfung sind aus Tabelle 6 ersichtlich.

Tabelle 6:

| | Gew.-Teile |
|---|---|
| Epoxidharz/Pfropfpolymer-Suspension | 110* |
| Methyltetrahydrophthalsäureanhydrid | 62 |
| 3,6,9-Trioxaundecandisäure | 18,1 |
| 1-Methylimidazol | 0,5 |
| Quarzmehl W12 | 286 |
| Bruchzähigkeit $G_{IC}$ (Double Torsion) [$J/m^2$] | 697 |
| Schlagbiegezähigkeit (ISO) [$kJ/m^2$] | 12,1 |
| Biegefestigkeit (ISO) [$N/mm^2$] | 126 |
| Randfaserdehnung (ISO) [%] | 1,8 |

* 10 Gew.-Teile Zähigkeitsvermittler auf 100 Gew.-Teile Epoxidharz

Beispiel 7:

Analog zu Beispiel 3 wird ein ungefülltes Epoxidharzsystem mit demselben Epoxidharz auf der Basis von Bisphenol A und Cycloolefin eingesetzt.
Die eingesetzten Mengen und die Resultate der Zähigkeitsprüfung sind aus Tabelle 7 ersichtlich.

Tabelle 7

| | Gew.-Teile |
|---|---|
| Epoxidharz | 100 |
| Methyltetrahydrophthalsäureanhydrid | 70,9 |
| Polymer II aus Beispiel A | 19,64 |
| Bisphenol A | 19,51 |
| 1-Methylimidazol | 0,5 |
| Bruchzähigkeit $G_{IC}$ (Double Torsion) [$J/m^2$] | 765 |
| Schlagbiegezähigkeit (ISO) [$kJ/m^2$] | 35,7 |
| Biegefestigkeit (ISO) [$N/mm^2$] | 120 |
| Randfaserdehnung (ISO) [%] | 6,7 |

Beispiel 8-11:

Zu 110 Gew.-Teilen Epoxidharz/Pfropfpolymer-Suspension aus Beispiel H werden Methyltetrahydrophthalsäureanhydrid und 3,6,9-Trioxaundecandisäure bei 60 °C zugegeben und vermischt.
Die eingesetzten Mengen und die Resultate der Zähigkeitsprüfung sind aus Tabelle 8 ersichtlich.

Tabelle 8:

| Beispiel | Gew.-Teile | | | |
|---|---|---|---|---|
| | 8 | 9 | 10 | 11 |
| Epoxidharz/Pfropfpolymer-Suspension | 110* | 110* | 110* | 110* |
| Methyltetrahydrophthalsäureanhydrid | 62,0 | 66,5 | 71,0 | 71,0 |
| 3,6,9-Trioxaundecandisäure | 18,1 | 15,1 | 12,1 | 12,1 |
| 1-Methylimidazol | 0,5 | 0,5 | 0,5 | 0,5 |
| Quarzmehl W12 | - | - | - | 290,4 |
| Bruchzähigkeit $G_{IC}$ (Double Torsion) [J/m²] | 2222 | 1684 | 1375 | 700 |
| Schlagbiegezähigkeit (ISO) [kJ/m²] | 69,7 | 62,7 | 59,0 | 12,2 |
| Biegefestigkeit (ISO) [N/mm²] | 124 | 125 | 124 | 122 |
| Randfaserdehnung (ISO) [%] | 11,0 | 10,2 | 10,9 | 1,9 |

* 10 Gew.-Teile Zähigkeitsvermittler auf 100 Gew.-Teile Epoxidharz

Beispiel 12:

Eine Mischung aus 85 Gew.-Teilen Methylhexahydrophthalsäureanhydrid, 5 Gew.-Teilen einer Dicarbonsäure, hergestellt durch Reaktion von 2 mol Tetrahydrophthalsäureanhydrid mit 1 mol Neopentylglykol, und 0,2 Gew.-Teilen 1-Methylimidazol wird bei 60 °C homogenisiert und bei gleicher Temperatur zu 100 Gew.-Teilen Epoxidharz auf Basis von Bisphenol A mit einem Epoxidgehalt von 5,25-5,40 Äq./kg hinzugegeben.
Dem Gemisch wird unter kräftigem Rühren portionsweise 10 Gew.-Teile des Zähigkeitsvermittlers Paraloid®EXL 2600 (Rohm & Haas, USA, Teilchengrösse: 0,1-0,3 µm) und 300 Gew.-Teile Quarzmehl W 12 hinzugefügt. Nach beendeter Zugabe wird die Temperatur innerhalb von 10 min auf 80 °C erhöht, und die Reaktionsmischung wird für 10 min auf ca. 40-50 mbar evakuiert.
Anschliessend wird das Gemisch zu Prüfkörpern vergossen. Die Härtung erfolgt 2 h bei 100 °C und danach 16 h bei 140 °C.
Die Prüfresultate sind in Tabelle 9 dargestellt.

Tabelle 9:

| | Beispiel 12 |
|---|---|
| Glasumwandlungstemp. $T_g$ (DSC) [°C] | 146 |
| Zugfestigkeit (ISO) [$N/mm^2$] | 46 |
| Bruchzähigkeit $G_{IC}$ (Double Torsion) [$J/m^2$] | 610 |
| Schlagbiegezähigkeit (ISO) [$kJ/m^2$] | 10,7 |
| Biegefestigkeit (ISO) [$N/mm^2$] | 116 |
| Bruchdehnung (ISO) [%] | 2,06 |

**Patentansprüche**

1. Epoxidharzzusammensetzung enthaltend
   a) mindestens ein Epoxidharz mit durchschnittlich mehr als einer 1,2-Epoxygruppe pro Molekül,
   b) einen Anhydridhärter für das Epoxidharz a),
   c) einen Zähigkeitsvermittler und
   d) eine Verbindung mit zwei aktiven Wasserstoffatomen, die befähigt ist, mit dem Epoxidharz a) zu reagieren.

2. Epoxidharzzusammensetzung gemäss Anspruch 1 enthaltend zusätzlich einen Füllstoff.

3. Epoxidharzzusammensetzung gemäss Anspruch 1, worin das Epoxidharz a) ein Harz auf der Basis von Bisphenol A, Bisphenol F oder von einem Cycloolefin ist.

4. Epoxidharzzusammensetzung gemäss Anspruch 1, worin das Epoxidharz a) durchschnittlich zwei 1,2-Epoxygruppen pro Molekül enthält.

5. Epoxidharzzusammensetzung gemäss Anspruch 1, worin das Epoxidharz a) flüssig und niederviskos ist.

6. Epoxidharzzusammensetzung gemäss Anspruch 1, worin der Anhydridhärter b) ein lineares aliphatisches polymeres Anhydrid oder ein cyclisches Carbonsäureanhydrid darstellt.

7. Epoxidharzzusammensetzung gemäss Anspruch 6, worin der Anhydridhärter b) ein cyclisches Carbonsäureanhydrid ist.

8. Epoxidharzzusammensetzung gemäss Anspruch 1, welche zusätzlich einen Beschleuniger für den Anhydridhärter b) enthält.

9. Epoxidharzzusammensetzung gemäss Anspruch 1, worin der Zähigkeitsvermittler ein Core/Shell-Polymer ist.

10. Epoxidharzzusammensetzung gemäss Anspruch 9, worin der Shell-Teil des Polymers keine mit Epoxygruppen reagierende Gruppen aufweist.

11. Epoxidharzzusammensetzung gemäss Anspruch 1, worin die Menge des Zähigkeitsvermittlers c) bis 40 Gew.-%, bezogen auf das Epoxidharz a), beträgt.

12. Epoxidharzzusammensetzung gemäss Anspruch 9, worin die Grösse der Core/Shell-Polymerpartikel 0,05-30 µm beträgt.

13. Epoxidharzzusammensetzung gemäss Anspruch 9, worin der Core des Core/Shell-Polymers Polybutadien enthält.

14. Epoxidharzzusammensetzung gemäss Anspruch 1, worin die Verbindung d) ein Biphenol, eine Hydroxycarbonsäure, eine Dicarbonsäure, ein disekundäres Amin oder ein primäres Amin ist.

15. Epoxidharzzusammensetzung gemäss Anspruch 14, worin die Verbindung d) zwei phenolische OH-Gruppen aufweist.

16. Epoxidharzzusammensetzung gemäss Anspruch 15, worin die Verbindung d) Bisphenol A ist.

17. Epoxidharzzusammensetzung gemäss Anspruch 1, worin die Menge der Verbindung d) bis 50 Gew.-%, bezogen auf das Epoxidharz a), beträgt.

18. Epoxidharzzusammensetzung gemäss Anspruch 2, worin der Füllstoff ein mineralischer oder faserförmiger Füllstoff ist.

19. Epoxidharzzusammensetzung gemäss Anspruch 18, worin der Füllstoff Quarzmehl, Quarzgut, Aluminiumoxid oder Dolomit ist.

20. Gehärtete Produkte, erhältlich durch Härtung der Epoxidharzzusammensetzungen gemäss Anspruch 1 auf an sich übliche Weise.

21. Verfahren zur Verbesserung der Zähigkeit von Epoxidharzen, dadurch gekennzeichnet, dass man zu einem ungefüllten oder gefüllten Epoxidharz-/Anhydridhärtersystem eine Kombination eines Zähigkeitsvermittlers mit einer Verbindung d) gemäss Anspruch 1 zugibt.

22. Verwendung der Epoxidharzzusammensetzungen gemäss Anspruch 1 als Giessharz, Laminierharz, Pressmasse, Beschichtungsmasse oder als Umhüllungssystem von elektrischen oder elektronischen Bauteilen.